# EUROPÄISCHE PATENTANMELDUNG

(11) **EP 4 261 116 A1**
(43) Veröffentlichungstag der Anmeldung: **18.10.2023**
(21) Anmeldenummer: 23166546.4
(22) Anmeldetag: 04.04.2023
(51) Int. Cl.: B62K 21/12

(54) **VERSTELLWEG-KOMPENSIERENDES LENKELEMENT**

(30) Priorität: 14.04.2022 DE 202022102017 U
(71) Anmelder: Canyon Bicycles GmbH, 56073 Koblenz (DE)
(72) Erfinder: Adomeit, Michael, 56068 Koblenz (DE); Birr, Lukas, 53113 Bonn (DE)
(74) Vertreter: dompatent von Kreisler Selting Werner - Partnerschaft von Patent- und Rechtsanwälten mbB

(57) **Zusammenfassung**

Ein Übertragungselement zur Anordnung zwischen einem Lenkervorbau (26) und einem oberen Steuerlager weist einen Abdeckring (12) auf, der in montiertem Zustand ein oberes Steuerlager abdeckt. Oberhalb des Abdeckrings (12) ist ein Zwischenring (10) angeordnet, der ein Steuerrohr (36) umgibt. Zum Ausgleich von Spieländerungen der Steuerlager ist zwischen dem Abdeckring (12) und dem Zwischenring (10) ein Vorspannelement (14) angeordnet.

## Beschreibung

Die Erfindung betrifft ein Verstellweg-kompensierendes Lenkelement zur Anordnung zwischen einem Lenkervorbau eines Fahrrades und einem insbesondere oberen Steuerlager.

Die Vorderradgabel eines Fahrrades ist im Gabelrohr des Fahrradrahmens drehbar gelagert. Hierzu ist ein oberes und ein unteres Steuerlager vorgesehen, die das Steuerrohr an der Vorderradgabel umgeben und im Gabelrohr angeordnet sind. Es ist erforderlich, das Spiel der Steuerlager einzustellen. Dies erfolgt üblicherweise derart, dass eine Vorbauklemme, mit der der Vorbau am Steuerrohr fixiert ist, zunächst gelöst wird. Anschließend erfolgt mit Hilfe einer Einstellschraube ein Einstellen des Lagerspiels. Hierbei wird die Vorbauklemme relativ zum Steuerrohr verschoben, um das Lagerspiel einzustellen. Gegebenenfalls sind zwischen einer Unterseite der Vorbauklemme und einer Oberseite des oberen Steuerlagers Zwischenelemente, wie Spacer, angeordnet.

Beispielsweise durch Setzungserscheinungen, Abrieb oder dergleichen kann sich das Spiel vergrößern. Dies führt dazu, dass ein nicht gewünschtes axiales Spiel entsteht. Häufig vergrößert sich dieses Spiel im Laufe der Zeit, sodass dies negativen Einfluss auf das Fahrverhalten haben kann. Bei zu großem Spiel kann auch ein Beschädigen von Bauteilen, insbesondere des oberen Steuerlagers, auftreten.

Aufgabe der Erfindung ist es, ein Übertragungselement zur Anordnung zwischen einem Lenkervorbau und einem Steuerlager zu schaffen, mit dem das Risiko einer Lagerspielvergrößerung verringert ist.

Die Lösung der Aufgabe erfolgt erfindungsgemäß durch ein Übertragungselement mit den Merkmalen des Anspruchs 1.

Das erfindungsgemäße Übertragungselement dient zur Anordnung zwischen einem Lenkervorbau und einem insbesondere oberen Steuerlager. Hierbei umgibt das Übertragungselement in montiertem Zustand vorzugsweise vollständig das Steuerrohr der Fahrradgabel. Sowohl zwischen dem Übertragungselement und dem Lenkervorbau, als auch zwischen dem Übertragungselement und dem Steuerlager, können Zwischenelemente, wie Abstandsringe, Spacer oder dergleichen, angeordnet sein. Erfindungsgemäß weist das Übertragungselement einen Abdeckring, sowie einen Zwischenring auf. Der Abdeckring ist in montiertem Zustand oberhalb des Steuerlagers angeordnet und deckt das Steuerlager mittelbar oder unmittelbar ab, je nachdem, ob Spacer oder dergleichen zwischen dem Abdeckring und dem Steuerlager angeordnet sind. Vorzugsweise handelt es sich bei dem Abdeckring um einen vollständigen in sich geschlossenen Ring, wobei auch eine teilringförmige Ausgestaltung des Abdeckrings möglich ist. Der Zwischenring umgibt in montiertem Zustand das Steuerrohr und ist zwischen dem Abdeckring und dem Übertragungselement angeordnet. Bei dem Zwischenring handelt es sich in bevorzugter Ausführungsform wiederum um einen vollständig geschlossenen Ring. Bevorzugt ist es, dass der Abdeckring und der Zwischenring koaxial zueinander angeordnet sind.

Erfindungsgemäß ist zwischen dem Abdeckring und dem Zwischenring ein Vorspannelement angeordnet. Das Vorspannelement bewirkt ein auseinander drücken von Abdeckring und Zwischenring. Von dem Vorspannelement werden somit entsprechende Kräfte erzeugt, die bezogen auf das Steuerrohr axial wirken. Insofern wird durch das Vorspannelement eine Kraft auf das obere Lager in montiertem Zustand ausgeübt.

Zur Montage wird, wie üblich, der Vorbau gelockert, sodass dieser nicht mehr fest mit dem Steuerrohr verbunden ist. Anschließend erfolgt über eine entsprechende Schraube oder ein anderes Spannelement das Einstellen des Lagerspiels. In diesem eingebauten Zustand ist das Vorspannelement vorgespannt, bzw. zusammengedrückt. Sollte sich das Lagerspiel nunmehr im Laufe der Zeit, beispielsweise durch Setzungserscheinungen oder dergleichen vergrößern, wirkt das Vorspannelement eine Vergrößerung des Lagerspiels entgegen und gleicht dieses somit aus. Durch das Vorspannelement ist ein Vergrößern des Lagerspiels somit, zumindest in gewissen Bereichen, vermieden. Je nach Ausgestaltung des Vorspannelements kann beispielsweise eine Lagerspieländerung von 1mm bis 2mm ausgeglichen werden.

In bevorzugter Ausführungsform handelt es sich bei dem Vorspannelement um ein elastisches Element, wobei es besonders bevorzugt ist, dass das Vorspannelement ein Federelement aufweist und insbesondere aus einem oder mehreren Federelementen besteht. Hierdurch kann auf einfache Weise eine entsprechende Vorspannkraft aufgebracht werden. Des Weiteren ist es bevorzugt, dass das Vorspannelement ringförmig ausgebildet ist, wobei es sich vorzugsweise um einen oder mehrere vollständige Ringe handelt. Besonders bevorzugt ist es hierbei, dass das Vorspannelement eine oder mehrere ringförmig ausgebildete Wellenscheiben aufweist. In montiertem Zustand umgeben diese vorzugsweise das Steuerrohr.

Alternativ zu den bevorzugten Ausbildungen als ringförmige Federelemente, insbesondere Wellenscheiben, können auch mehrere am Umfang, insbesondere regelgemäß verteilt angeordnete Spiralfedern und/oder einen Elastomerkörper oder dergleichen als Vorspannelement vorgesehen sein, wobei auch Kombinationen unterschiedlicher Federelemente und dergleichen möglich sind.

In bevorzugter Weiterbildung der Erfindung weist der Abdeckring auf einer in Richtung des Vorspannelements weisenden Oberseite einen Ansatz oder Vorsprung auf. Dieser dient zur Justage und ggf. zum Vorspannen des Vorspannelements.

Eine Unterseite des Abdeckrings, d.h. diejenige Seite des Abdeckrings, die in montiertem Zustand in Richtung des oberen Steuerlagers weist, ist in bevorzugter Ausführungsform eben ausgebildet. Hierdurch ist insbesondere sichergestellt, dass die Unterseite des Abdeckrings flächig am Steuerlager oder einem dazwischen angeordneten Ringelement aufliegt, sodass eine gleichmäßige Kraftübertragung sichergestellt ist.

Bei einer besonders bevorzugten Weiterbildung der Erfindung weist der Zwischenring an einer in Richtung des Vorspannelements weisenden Unterseite eine Nut oder Ausnehmung auf. Diese dient zur zumindest teilweisen Aufnahme des Vorspannelements. Hierdurch ist das Vorspannelement einerseits in seiner Lage justiert und andererseits abgedeckt und hierdurch beispielsweise auch vor Verschmutzungen geschützt. Bei einem insbesondere kreisförmig ausgebildeten Zwischenring ist die Nut oder Ausnehmung vorzugsweise ebenfalls ringförmig ausgebildet und umlaufend. Die Nut oder Ausnehmung kann nach innen, d.h. in Richtung des Steuerrohrs und in Richtung des Vorspannelements, offen sein. Die Nut oder Ausnehmung ist insofern durch einen insbesondere ringförmigen, bezogen auf den Umfang des Zwischenrings, außenliegenden ringförmigen Ansatz ausgebildet.

In vollständig vorgespannter Position, d.h. in der Position, in der das Vorspannelement insbesondere vollständig zusammengedrückt ist, überdeckt der Zwischenring in bevorzugter Ausführungsform den Abdeckring. Die Abdeckung erfolgt hierbei insbesondere aufgrund des Vorsehens der Nut bzw. des außenliegenden ringförmigen Ansatzes am Zwischenring. Bevorzugt ist es insofern, dass die Nut eine Tiefe aufweist, die tiefer ist als die Dicke des vollständig vorgespannten Vorspannelements. Hierdurch ist nicht nur das Vorspannelement, sondern auch der Abdeckring in Längsrichtung, bzw. in axialer Richtung des Steuerrohrs zumindest teilweise abgedeckt.

Bevorzugt ist es ferner, dass der Abdeckring eine Markierung, beispielsweise eine Farbmarkierung oder dergleichen aufweist. Diese Markierung ist bei vollständig vorgespanntem Vorspannelement vom Zwischenring abgedeckt und insofern nicht sichtbar. Wenn sich das Lagerspiel vergrößert und durch das Vorspannelement ausgeglichen wird, vergrößert sich der Abstand zwischen dem Abdeckring und dem Zwischenring, wobei in bevorzugter Ausführungsform die Markierung zumindest teilweise sichtbar wird. Dies hat den Vorteil, dass auf einfache Weise sichtbar ist, dass sich das Lagerspiel vergrößert hat bzw. eine Vergrößerung durch das Vorspannelement ausgeglichen wurde. Ggf. sollte daher bei der nächsten Inspektion bzw. Wartung das Lagerspiel wieder neu eingestellt werden. Aufgrund der Erfindung ist ein unmittelbares Nachjustieren nicht erforderlich.

Die vorstehend beschriebene Ausgestaltung von Zwischenring und Abdeckring, insbesondere hinsichtlich der Nut oder Ausnehmung und einer entsprechenden Abdeckung des Vorspannelements und/oder des Abdeckrings, sowie auch der Markierung, kann auch umgekehrt erfolgen, sodass eine kinematische Umkehr zwischen diesen Elementen der Bauteile möglich ist.

In bevorzugter Weiterbildung ist der Zwischenring mit einem Lenkervorbau formschlüssig verbunden. Dies kann beispielsweise durch Ansätze, wie Pints oder dergleichen erfolgen, die in entsprechende Ausnehmungen ragen. Unabhängig hiervon kann die Oberseite des Zwischenrings gegenüber einer in Richtung des Vorspannelements weisenden Unterseite des Zwischenrings geneigt sein. Insbesondere verringert sich der Abstand der Oberseite zur Unterseite in Fahrtrichtung in montiertem Zustand.

Ferner betrifft die Erfindung ein Steuersystem eines Fahrrades. Dieses weist eine Vorderradgabel mit Steuerrohr auf, das in einem Gabelrohr des Fahrradrahmens angeordnet ist. Innerhalb des Gabelrohrs sind zwei Steuerlager angeordnet, die das Steuerrohr umgeben und das Drehen des Steuerrohrs im Gabelrohr ermöglichen. In dem Bereich des oberen Endes des Steuerrohrs ist das erfindungsgemäße Übertragungselement angeordnet. Oberhalb des Übertragungselements ist der Lenkervorbau mit dem Steuerrohr lösbar verbunden.

Ferner ist ggf. ein Spannelement in Form einer Spannschraube zum Einstellen des Lagerspiels vorgesehen. Das Übertragungselement ist vorzugsweise, wie vorstehend beschrieben, vorteilhaft weitergebildet.

Nachfolgend ist die Erfindung anhand einer bevorzugten Ausführungsform unter Bezugnahmen auf die anliegenden Zeichnungen näher erläutert.

Es zeigen:

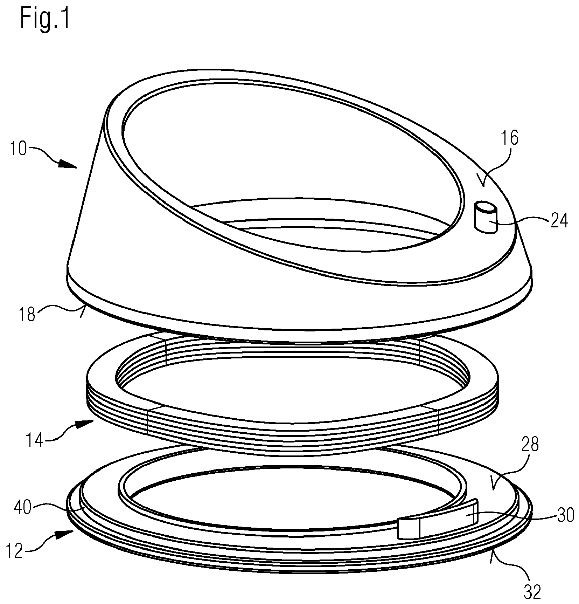

- Figur 1: eine schematische perspektivische Ansicht der Einzelteile des Übertragungselements,
- Figur 2a: eine schematische Seitenansicht des montierten Übertragungselements in vollständig vorgespanntem Zustand,
- Figur 2b: eine schematische Seitenansicht des montierten Übertragungselements in teilweise entspanntem Zustand, und
- Figuren 3a und 3b: Darstellungen entsprechend der Figuren 2a und 2b, wobei zur Verdeutlichung der Zwischenring geschnitten dargestellt ist.

In der dargestellten Ausführungsform weist das Übertragungselement einen Zwischenring 10 sowie einen Abdeckring 12 auf. Zwischen dem Zwischenring 10 und dem Abdeckring 12 ist ein Vorspannelement 14 angeordnet. Das Vorspannelement 14 weist im dargestellten Ausführungsbeispiel mehrere aufeinanderliegende Wellenscheiben auf. Der Abdeckring 10 kann je nach Ausgestaltung des Vorbaus und der Art des Vorspannens der Steuerlager auch als Abdeckkappe ausgebildet sein.

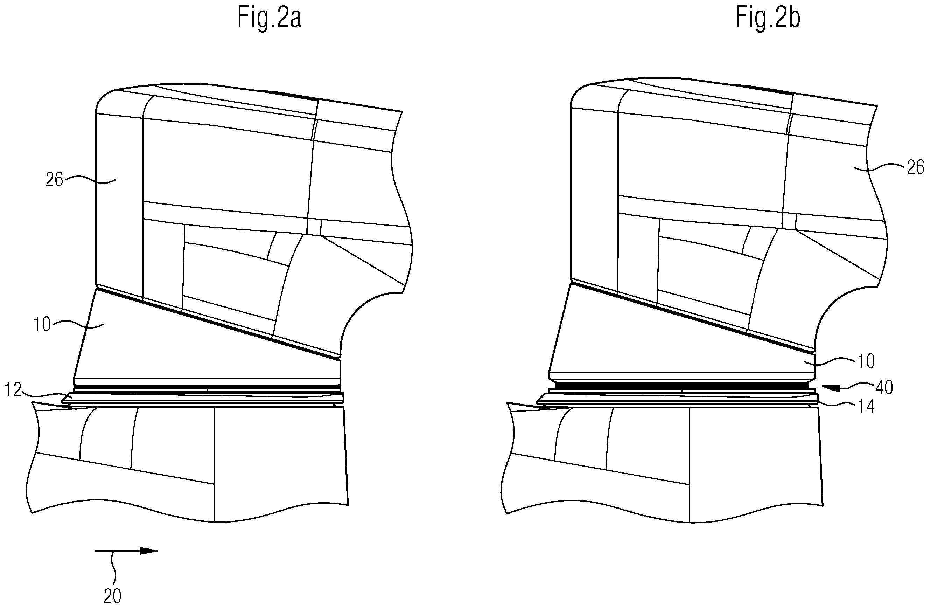

Im dargestellten Ausführungsbeispiel ist der Zwischenring 10 in Seitenansicht trapez- bzw. keilförmig ausgebildet, sodass eine Oberseite 16 des Zwischenrings 10 gegenüber einer Unterseite 18 des Zwischenrings 10 geneigt ist. Der Abstand der Flächen 16, 18 verringert sich zueinander in Fahrtrichtung 20 (Figur 2a).

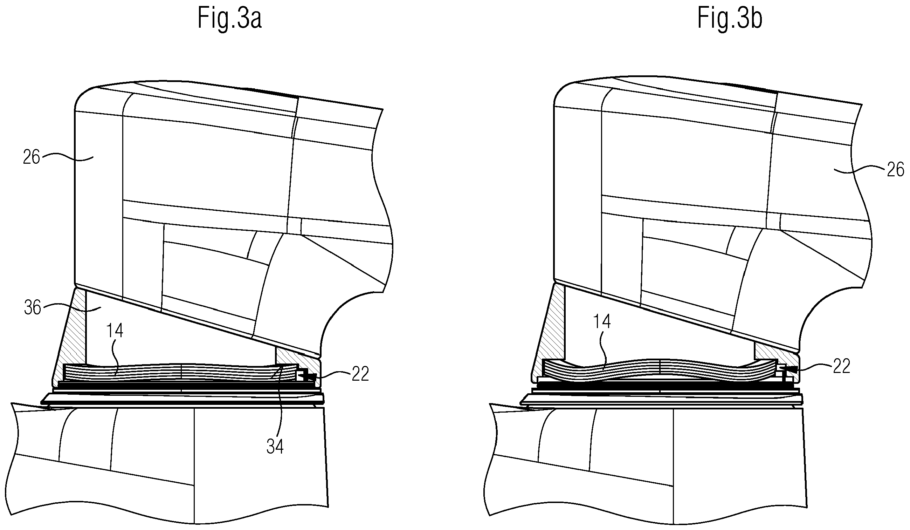

Zur Aufnahme des mehrere Wellenscheiben aufweisenden Vorspannelements 14 weist der Zwischenring an seiner Unterseite 18 eine Nut oder Ausnehmung 22 auf (Figur 3a). Ferner weist der Zwischenring an der Oberseite 16 im dargestellten Ausführungsbeispiel einen Justagepin 24 auf, der in eine nicht dargestellte Öffnung des Vorbaus 26 zur formschlüssigen Verbindung mit dem Vorbau 26 eingreift.

Der Abdeckring 12 weist eine in Richtung des Vorspannelements 14 weisende Oberseite 28 auf. Auf dieser liegt das Vorspannelement 14 in montiertem Zustand (Figuren 3a und 3b) zumindest teilweise auf. Im dargestellten Ausführungsbeispiel weist der Abdeckring 12 an der Oberseite 28 ferner einen Ansatz 30 zur Justage und/oder zum Vorspannen des Vorspannelements 14 auf. Des Weiteren ist der Abdeckring 12 gestuft ausgebildet und weist somit an einer Unterseite 32 einen größer ausgebildeten Ring auf. Die Unterseite 32 liegt ggf. unter Zwischenordnung von Abstandsringen (Spacern) auf dem oberen Steuerlager auf. In montiertem Zustand liegt das Vorspannelement 14 einerseits auf der Oberseite 28 des Abdeckrings 12 und andererseits in der durch die Nut oder Ausnehmung 22 gebildeten Anlagefläche 34 (Figur 3a) auf.

Zur Montage wird der über nicht dargestellte Klemmelemente oder dergleichen mit einem Steuerrohr 36 verbundene Vorbau 26 gelöst. Anschließend kann über eine insbesondere in Längsrichtung des Steuerrohrs 36 verlaufende in einem oberen Bereich 38 des Vorbaus 26 anliegende Schraube das Lagerspiel eingestellt werden.

Nach erfolgtem Einstellen bzw. Vorspannen der Steuerlager wird der Lenkervorbau 26 wieder klemmend am Steuerrohr 36 fixiert.

In der vollständig vorgespannten Lage (Figur 2a und 3a) ist das Vorspannelement 14 zusammengedrückt. Der Abdeckring 12 weist gegenüber dem Zwischenring 10 allenfalls einen geringen Abstand auf. Vergrößert sich das Lagerspiel wird dieses durch das Vorspannelement ausgeglichen, wobei sich die Lage des Vorspannelements 14 in die beispielsweise in Figur 2b und 3b dargestellte Position verändert. Hierdurch vergrößert sich der Abstand zwischen dem Abdeckring 14 und dem Zwischenring 10, sodass eine Markierung 40, bei der es sich im dargestellten Ausbildungsbeispiel um eine Farbmarkierung handelt, sichtbar wird (Figur 2b).

## Patentansprüche

1. Übertragungselement zur Anordnung zwischen einem Lenkervorbau (26) und einem insbesondere oberen Steuerlager, mit
einem Abdeckring (12), der in montiertem Zustand ein oberes Steuerlager abdeckt,
einem Zwischenring (10), der in montiertem Zustand ein Steuerrohr (36), vorzugsweise vollständig, umgibt und
einem zwischen dem Abdeckring (12) und dem Zwischenring (10) angeordneten Vorspannelement (14).

2. Übertragungselement nach Anspruch 1, **dadurch gekennzeichnet, dass** das Vorspannelement (14) mindestens ein Federelement aufweist.

3. Übertragungselement nach Anspruch 1 bis 2, **dadurch gekennzeichnet, dass** das Vorspannelement (14) ringförmig ausgebildet ist.

4. Übertragungselement nach Anspruch 1 bis 3, **dadurch gekennzeichnet, dass** das Vorspannelement (14) zumindest eine Wellenscheibe aufweist.

5. Übertragungselement nach Anspruch 1 bis 4, **dadurch gekennzeichnet, dass** der Abdeckring (12) auf einer in Richtung des Vorspannelements (14) weisenden Oberseite (28) einen Ansatz (30) aufweist.

6. Übertragungselement nach Anspruch 1 bis 5, **dadurch gekennzeichnet, dass** der Abdeckring (12) eine in Richtung des oberen Steuerlagers weisende ebene Unterseite (32) aufweist.

7. Übertragungselement nach Anspruch 1 bis 6, **dadurch gekennzeichnet, dass** der Zwischenring (10) an einer in Richtung des Vorspannelements (14) weisenden Unterseite (18) eine Nut (22) oder Ausnehmung zur Aufnahme des Vorspannelements (14) aufweist.

8. Übertragungselement nach Anspruch 1 bis 7, **dadurch gekennzeichnet, dass** der Zwischenring (10) in vollständig vorgespannter Position den Abdeckring (12) zumindest teilweise seitlich überdeckt.

9. Übertragungselement nach Anspruch 7 oder 8, **dadurch gekennzeichnet, dass** die Nut (22) oder Ausnehmung eine Tiefe aufweist, die tiefer ist als die Dicke des vollständig vorgespannten Vorspannelements (14).

10. Übertragungselement nach Anspruch 7 bis 9, **dadurch gekennzeichnet, dass** der Abdeckring (12) eine Markierung (40) aufweist, die bei vollständig vorgespanntem Vorspannelement vom Zwischenring (10) abgedeckt und bei nur teilweise vorgespanntem Vorspannelement (14) sichtbar ist.

11. Übertragungselement nach Anspruch 1 bis 10, **dadurch gekennzeichnet, dass** der Zwischenring (10) mit einem Lenkervorbau (26) formschlüssig verbunden ist.

12. Übertragungselement nach Anspruch 1 bis 11, **dadurch gekennzeichnet, dass** eine Oberseite (16) des Zwischenrings (10) gegenüber einer in Richtung des Vorspannelements (14) weisenden Unterseite (18) des Zwischenrings (10) geneigt ist.
